# EUROPEAN PATENT APPLICATION

(11) **EP 4 797 359 A1**
(43) Date of publication of application: **26.08.2026**
(21) Application number: 25875435.7
(22) Date of filing: 29.09.2025
(51) Int. Cl.: H01M 4/62, H01M 4/13, C01B 32/174, C01B 32/05, C08K 3/04, H01M 4/02

(54) **CONDUCTIVE MATERIAL DISPERSION AND PREPARATION METHOD THEREFOR**

(30) Priority: 02.10.2024 KR 20240133644; 26.09.2025 KR 20250139581
(71) Applicant: LG Chem, Ltd., Seoul 07336 (KR)
(72) Inventor: BAEK, Hyeon Hui, Seoul 07796 (KR); KIM, Taehyeob, Seoul 07796 (KR); LEE, Jumin, Seoul 07796 (KR); AHN, Jeong Hyuk, Seoul 07796 (KR); YOON, Kiyoul, Seoul 07796 (KR)
(74) Representative: Hoffmann Eitle
(86) International application number: PCT/KR2025/015349
(87) International publication number: WO 2026/075441

(57) **Abstract**

A conductor dispersed solution including a carbon-based conductor, a first dispersant including a vinyl-based polymer containing nitrogen atoms, a second dispersant including a main component and an auxiliary component, and a dispersion medium, and a method for manufacturing the same are provided. The main component includes a cellulose-based polymer, the auxiliary component includes at least one of a lactone-based polymer and a glycol-based polymer, and through manufacturing of a conductor dispersed solution including the first dispersant and the second dispersant together, reduction in particle size of dispersed particles in the dispersed solution and reduction in viscosity of the dispersed solution are brought about, so that the carbon-based conductor may have characteristics of being uniformly and effectively dispersed in the dispersed solution.

## Description

### [TECHNICAL FIELD]

The present application claims the benefit of priority based on Korean Patent Application No. 10-2024-0133644 filed on October 2, 2024 and Korean Patent Application No. 10-2025-0139581 filed on September 26, 2025, and incorporates all content disclosed in the documents of the Korean patent applications as part of the specification.

The present invention relates to a conductor dispersed solution and a method for manufacturing the same. Specifically, the present invention relates to a conductor dispersed solution including a carbon-based conductor, a first dispersant including a vinyl-based polymer containing nitrogen atoms, a second dispersant including a main component and an auxiliary component, and a dispersion medium, wherein the main component includes a cellulose-based polymer, and the auxiliary component includes at least one of a lactone-based polymer and a glycol-based polymer, and a method for manufacturing the same.

### [BACKGROUND ART]

As technology development and demand for mobile devices increase, demand for secondary batteries as energy sources is rapidly increasing. Among these secondary batteries, lithium secondary batteries having high energy density and voltage, long cycle life, and low self-discharge rate have been commercialized and are widely used. In addition, as electrodes for such high-capacity lithium secondary batteries, research is being actively conducted on methods for manufacturing electrodes with higher energy density per unit volume by improving electrode density.

Generally, a high-density electrode is formed by molding electrode active material particles having a size of several µm to several tens of µm by a high-pressure press, and during the molding process, the particles may be deformed and spaces between the particles may be reduced, so that electrolyte permeability may be easily deteriorated.

In order to solve the above problems, a conductor having excellent electrical conductivity and strength is used when manufacturing an electrode. The conductor is positioned between electrode active materials, and even when subjected to a molding process, may maintain micropores between the active material particles so that the electrolyte may easily penetrate, and has excellent electrical conductivity to reduce resistance in the electrode.

Various materials may be used as the conductor, and among them, the use of carbon black or carbon nanotubes is increasing. When the conductor is added to an electrode slurry in a powder state, there is a problem that the electrical conductivity of the manufactured electrode is deteriorated because the conductor is not uniformly dispersed. Accordingly, a method of manufacturing a conductor dispersed solution by mixing the conductor with a dispersant and a dispersion medium, and then applying the conductor dispersed solution to an electrode slurry composition is being used. As the dispersant, PVP or hydrogenated nitrile butadiene rubber (HNBR) is mainly used.

However, a conductor dispersed solution using only PVP or hydrogenated nitrile butadiene rubber has a problem in that the particle size of dispersed particles cannot be greatly reduced. When the particle size of dispersed particles cannot be reduced, the viscosity increases rapidly when the conductor content increases, so there is a limit to increasing the conductor content, which limits improvement in productivity of the conductor dispersed solution. Specifically, when the conductor content cannot be increased, it is difficult to increase the solid content of the positive electrode slurry, so processability may be deteriorated during manufacturing. In addition, in a drying process when manufacturing a positive electrode active material layer, the positive electrode active material layer may be formed non-uniformly.

In order to solve these problems, a method of mixing a conductor and a dispersant by various methods such as a jet, a mill, and a high-pressure homogenizer, and increasing the process time is being used. However, this method leads to problems of increased process cost and increased process time. In addition, in the case of such a mechanical dispersion treatment method, a problem may occur in that the conductor aggregates as soon as the process is completed. In addition, in the case of a conductor dispersed solution using only PVP or hydrogenated nitrile butadiene rubber, there is a limit to reducing the particle size of dispersed particles even if the process conditions are changed as described above.

Accordingly, there is a need to develop a dispersant having an excellent dispersion effect and a method capable of manufacturing a conductor dispersed solution having excellent dispersibility by reducing the particle size of dispersed particles in the dispersed solution and the viscosity of the dispersed solution even when the conductor content is increased.

### [PRIOR ART DOCUMENTS]

### [PATENT DOCUMENTS]

(Patent Document 1) Korean Patent Publication No. 2024-0115753

### [DISCLOSURE OF THE INVENTION]

### [TECHNICAL PROBLEM]

An objective of the present invention is to provide a conductor dispersed solution including a carbon-based conductor, a first dispersant including a vinyl-based polymer containing nitrogen atoms, a second dispersant including a main component and an auxiliary component, and a dispersion medium, wherein the main component includes a cellulose-based polymer, and the auxiliary component includes at least one of a lactone-based polymer and a glycol-based polymer, which has excellent reduction in particle size of dispersed particles and viscosity of the dispersed solution, thereby having improved dispersibility.

Another objective of the present invention is to provide a method for manufacturing the conductor dispersed solution.

### [TECHNICAL SOLUTION]

A first aspect of the present invention provides a conductor dispersed solution including a carbon-based conductor, a first dispersant including a vinyl-based polymer containing nitrogen atoms, a second dispersant including a main component and an auxiliary component, and a dispersion medium, wherein the main component includes a cellulose-based polymer, and the auxiliary component includes at least one of a lactone-based polymer and a glycol-based polymer.

In one embodiment of the present invention, the auxiliary component includes both a lactone-based polymer and a glycol-based polymer.

In one embodiment of the present invention, the second dispersant further includes a branched aliphatic hydrocarbon including at least one amine group and at least one hydroxy group.

In one embodiment of the present invention, a content of the first dispersant in the dispersed solution is 5 parts by weight to 60 parts by weight based on 100 parts by weight of the conductor.

In one embodiment of the present invention, a content of the second dispersant in the dispersed solution is 1 part by weight to 20 parts by weight based on 100 parts by weight of the conductor.

In one embodiment of the present invention, a content of the second dispersant in the dispersed solution is 10 parts by weight to 40 parts by weight based on 100 parts by weight of the first dispersant.

In one embodiment of the present invention, a total number of moles of cellulose-based polymer repeating units in the second dispersant : a total number of moles of lactone-based polymer repeating units is 2:1 to 10:1, and a total number of moles of cellulose-based polymer repeating units in the second dispersant : a total number of moles of glycol-based polymer repeating units is 2:1 to 10:1.

In one embodiment of the present invention, the dispersed solution further includes a third dispersant including a linear aliphatic hydrocarbon including at least one amine group and at least one hydroxy group.

In one embodiment of the present invention, a content of the third dispersant in the dispersed solution is 1 part by weight to 60 parts by weight based on 100 parts by weight of the conductor.

In one embodiment of the present invention, a content of the third dispersant in the dispersed solution is 5 parts by weight to 200 parts by weight based on 100 parts by weight of the first dispersant.

In one embodiment of the present invention, particles dispersed in the conductor dispersed solution have a span value represented by the following [Formula 1] of 0.5 to 3. $span = \left[\left({D}_{90}-{D}_{10}\right)\right] / {D}_{50}$

(Here, D₉₀ is a particle size corresponding to 90% of a volume cumulative distribution of particles dispersed in the dispersed solution, D₅₀ is a particle size corresponding to 50% of a volume cumulative distribution of particles dispersed in the dispersed solution, and D₁₀ is a particle size corresponding to 10% of a volume cumulative distribution of particles dispersed in the dispersed solution.)

In one embodiment of the present invention, the dispersion medium includes a non-aqueous polar solvent containing nitrogen atoms.

In one embodiment of the present invention, the carbon-based conductor includes at least one selected from the group consisting of carbon nanotubes; carbon black; and combinations thereof.

A second aspect of the present invention provides a method for manufacturing the conductor dispersed solution, the method including (1) mixing a carbon-based conductor, a first dispersant, a second dispersant, and a dispersion medium to manufacture a primary conductor dispersed solution, and (2) dispersing the primary conductor dispersed solution to manufacture a secondary conductor dispersed solution.

In one embodiment of the present invention, the step (2) includes a high-pressure dispersion process.

### [ADVANTAGEOUS EFFECTS]

The conductor dispersed solution according to the present invention includes a first dispersant including a vinyl-based polymer containing nitrogen atoms, a second dispersant including a main component and an auxiliary component, and a dispersion medium, wherein the main component includes a cellulose-based polymer, and the auxiliary component includes at least one of a lactone-based polymer and a glycol-based polymer, whereby the conductor dispersed solution has characteristics of small particle size of dispersed particles, low viscosity of the dispersed solution, and uniform and effective dispersion of the carbon-based conductor in the conductor dispersed solution.

Furthermore, when the conductor dispersed solution of the present invention is used in an electrode slurry composition, an electrode and a secondary battery having excellent capacity characteristics and cycle characteristics may be manufactured.

### [BEST MODE FOR CARRYING OUT THE INVENTION]

Hereinafter, the present invention will be described in more detail.

Prior to this, the terms or words used in the present specification and claims should not be construed as being limited to conventional or dictionary meanings, and should be interpreted as meanings and concepts consistent with the technical spirit of the present invention based on the principle that the inventor may appropriately define the concept of terms to describe his or her invention in the best way. Accordingly, the configurations described in the embodiments described in the present specification are merely the most preferred embodiments of the present invention and do not represent all of the technical spirit of the present invention, so it should be understood that there may be various equivalents and modifications that may replace them at the time of the present application.

In the present specification, when a part "includes" a component, this means that the part may further include other components rather than excluding other components unless otherwise stated.

In the present specification, "%" means weight % unless otherwise explicitly indicated.

In the present specification, "D₁₀", "D₅₀", and "D₉₀" mean particle sizes corresponding to 10%, 50%, and 90% of volume cumulative amounts, respectively. The D₁₀, D₅₀, and D₉₀ may be measured using, for example, a laser diffraction method. The laser diffraction method generally enables measurement of particle sizes from a submicron region to about several mm, and may obtain results with high reproducibility and high resolution.

In the present specification, "specific surface area" is measured by a BET method (Brunauer-Emmett-Teller Analysis), and specifically, may be calculated from a nitrogen gas adsorption amount at a liquid nitrogen temperature (77K) using BELSORP-mino II manufactured by BEL Japan.

Hereinafter, the present invention will be described in detail.

### Conductor dispersed solution

The conductor dispersed solution according to the present invention includes a carbon-based conductor, a dispersant, and a dispersion medium.

The conductor dispersed solution may be a conductor dispersed solution for electrode formation, and specifically, may be a conductor dispersed solution for positive electrode formation.

Hereinafter, each component of the conductor dispersed solution of the present invention will be described in detail.

### (1) Carbon-based conductor

The carbon-based conductor of the conductor dispersed solution according to one embodiment of the present invention is a material having excellent electrical conductivity, and when the conductor dispersed solution is used as a composition of an electrode slurry, it is used to impart electrical conductivity to the electrode slurry.

In one embodiment of the present invention, the carbon-based conductor includes at least one selected from the group consisting of carbon nanotubes; carbon black; and combinations thereof.

The carbon nanotubes are secondary structures formed by aggregating unit bodies of carbon nanotubes to form a bundle shape in whole or in part, and the unit bodies of carbon nanotubes have a nano-sized diameter in a cylindrical shape of a graphite sheet and have an sp² bonding structure. At this time, the carbon nanotubes may exhibit characteristics of a conductor or a semiconductor depending on the angle and structure in which the graphite sheet is rolled. The unit bodies of carbon nanotubes may be classified into single-walled carbon nanotubes (SWCNT), double-walled carbon nanotubes (DWCNT), and multi-walled carbon nanotubes (MWCNT) according to the number of bonds forming the wall.

The carbon nanotubes according to one embodiment of the present invention may include at least one of single-walled, double-walled, and multi-walled carbon nanotubes, but are not limited thereto, and may specifically include multi-walled carbon nanotubes.

In one embodiment of the present invention, a content of the carbon nanotubes in the conductor dispersed solution is 0.5 wt% to 10 wt%. Specifically, the content of the carbon nanotubes is 0.5 wt% or more, 1 wt% or more, 1.5 wt% or more, 2 wt% or more, 2.5 wt% or more, 3 wt% or more, 3.5 wt% or more, 4 wt% or more, or 4.5 wt% or more, and 10 wt% or less, 9.5 wt% or less, 9 wt% or less, 8.5 wt% or less, 8 wt% or less, 7.5 wt% or less, 7 wt% or less, 6.5 wt% or less, 6 wt% or less, 5.5 wt% or less, or 5 wt% or less, and may be 0.5 wt% to 10 wt%, 2 wt% to 8 wt%, or 3 wt% to 7 wt%. When the content of the carbon nanotubes satisfies the above range, high productivity is maintained and transfer and input of the electrode slurry are easy. In addition, since the solid content of the electrode slurry to be manufactured does not become excessively low, occurrence of binder migration during electrode drying may be suppressed. Accordingly, electrode adhesion may be improved, and packing of the electrode active material layer may be effectively performed, so that an electrode having a low thickness may be manufactured.

### (2) Dispersant

In one embodiment of the present invention, the conductor dispersed solution includes a first dispersant including a vinyl-based polymer containing nitrogen atoms and a second dispersant including a main component and an auxiliary component together as a dispersant for improving dispersibility of the carbon-based conductor.

The first dispersant and the second dispersant serve to increase dispersibility of the carbon-based conductor so that the carbon-based conductor may be evenly dispersed without being aggregated in the dispersed solution, and in particular, exhibit an effect of reducing the particle size of dispersed particles in the dispersed solution and the viscosity of the dispersed solution.

The first dispersant is a vinyl-based polymer containing nitrogen atoms, and may be included without limitation as long as it can be dissolved in the dispersion medium in the conductor dispersed solution according to the present invention.

In one embodiment of the present invention, the vinyl-based polymer containing nitrogen atoms includes one selected from the group consisting of polyvinylpyrrolidone, polyacrylic acid hydrazide, poly-N-vinyl-5-methoxazolidone, N-alkyl polyimine, N-acetyl polyimine, polyacrylamide, poly-L-lysine hydrobromide, benzyl-dodecyldimethylammonium chloride, polyethyleneimine, and combinations thereof.

In one embodiment of the present invention, a content of the first dispersant in the dispersed solution is 5 parts by weight to 60 parts by weight based on 100 parts by weight of the conductor. Specifically, the content of the first dispersant is 5 parts by weight or more, 10 parts by weight or more, 15 parts by weight or more, 20 parts by weight or more, or 25 parts by weight or more, and 60 parts by weight or less, 55 parts by weight or less, 50 parts by weight or less, 45 parts by weight or less, 40 parts by weight or less, 35 parts by weight or less, or 30 parts by weight or less, and may be 5 parts by weight to 60 parts by weight, 10 parts by weight to 50 parts by weight, or 20 parts by weight to 40 parts by weight. When the content of the first dispersant satisfies the above range, dispersibility of solids in the dispersed solution may be appropriately maintained, so that the viscosity of the dispersed solution may be formed low.

The conductor dispersed solution according to one embodiment of the present invention includes a second dispersant including a main component and an auxiliary component together in order to solve a problem that the viscosity of the dispersed solution increases together as the conductor content increases in a conductor dispersed solution including only the first dispersant, and accordingly, may exhibit an effect of having less agglomeration of particles in the slurry composition and a low sedimentation rate due to excellent dispersibility compared to a conventional conductor dispersed solution using only the first dispersant.

The main component includes a cellulose-based polymer, and the auxiliary component includes at least one of a lactone-based polymer and a glycol-based polymer.

The cellulose-based polymer means a cellulose-based polymer including cellulose and cellulose derivatives such as cellulose acetate, the lactone-based polymer means a polymer polymerized through a ring-opening reaction of lactone, and the glycol-based polymer means a polymer polymerized through a condensation reaction of glycol.

As the second dispersant includes a cellulose-based polymer as a main component, the second dispersant may form an interaction through van der Waals force or π-π interaction between the cellulose-based polymer and the carbon-based conductor, and may be adsorbed on the conductor not covered by the first dispersant to exhibit an additional dispersion effect. In addition, through a large surface area and a fibrous structure of the cellulose-based polymer, a physical interaction may be formed with the conductor to sufficiently ensure a bonding force between the dispersant and the conductor, thereby reducing an excess dispersant content not effectively adsorbed on the surface of the conductor to prevent aggregation between residual dispersants.

In addition, as the second dispersant includes at least one of a lactone-based polymer and a glycol-based polymer as an auxiliary component, the second dispersant may form a bond with the conductor through an interaction through van der Waals force, similar to the cellulose-based polymer, and may form an appropriate interaction between the second dispersants to prevent aggregation between the dispersants, thereby allowing a 'conductor-dispersant' complex to stably maintain a dispersed state in the dispersed solution.

In one embodiment of the present invention, a content of the second dispersant in the dispersed solution is 1 part by weight to 20 parts by weight based on 100 parts by weight of the conductor. Specifically, the content of the second dispersant is 1 part by weight or more, 3 parts by weight or more, or 5 parts by weight or more, and 20 parts by weight or less, 15 parts by weight or less, 13 parts by weight or less, 10 parts by weight or less, or 7 parts by weight or less, and may be 1 part by weight to 20 parts by weight, 3 parts by weight to 15 parts by weight, or 3 parts by weight to 10 parts by weight. When the content of the second dispersant satisfies the above range, interactions among the dispersant and the dispersion medium, the dispersion medium and the conductor, and the dispersants may be smoothly formed to exhibit an effective dispersion effect of the conductor in the dispersed solution.

In one embodiment of the present invention, a content of the second dispersant in the dispersed solution is 10 parts by weight to 40 parts by weight based on 100 parts by weight of the first dispersant. Specifically, the content of the second dispersant is 10 parts by weight or more, 15 parts by weight or more, or 20 parts by weight or more, and 40 parts by weight or less, 35 parts by weight or less, 30 parts by weight or less, or 25 parts by weight or less, and may be 10 parts by weight to 40 parts by weight, 15 parts by weight to 35 parts by weight, or 15 parts by weight to 30 parts by weight. When the content of the second dispersant satisfies the above range, the dispersant may be uniformly dispersed in the dispersed solution, so that the dispersed solution may exhibit a low viscosity.

In one embodiment of the present invention, a total number of moles of cellulose-based polymer repeating units in the second dispersant : a total number of moles of lactone-based polymer repeating units is 2:1 to 10:1. Specifically, the molar ratio is 2:1 or more, 3:1 or more, 4:1 or more, 5:1 or more, or 6:1 or more, and 10:1 or less, 9:1 or less, 8:1 or less, or 7:1 or less, and may be 2:1 to 10:1, 3:1 to 9:1, or 4:1 to 8:1. When the molar ratio satisfies the above range, an interaction between the second dispersants suitable for stably maintaining a 'conductor-dispersant' complex may be formed.

The total number of moles of cellulose-based polymer repeating units means a value obtained by adding all the number of moles of repeating units in each cellulose-based polymer for all cellulose-based polymers included in the second dispersant, and the total number of moles of lactone-based polymer repeating units also means a value obtained by adding all the number of moles of repeating units in each lactone-based polymer included in the second dispersant in the same manner, and the molar ratio means a molar ratio when a lactone-based polymer is included in the auxiliary component of the second dispersant.

In one embodiment of the present invention, a total number of moles of cellulose-based polymer repeating units in the second dispersant : a total number of moles of glycol-based polymer repeating units is 2:1 to 10:1. Specifically, the molar ratio is 2:1 or more, 3:1 or more, 4:1 or more, 5:1 or more, or 6:1 or more, and 10:1 or less, 9:1 or less, 8:1 or less, or 7:1 or less, and may be 2:1 to 10:1, 3:1 to 9:1, or 4:1 to 8:1. When the molar ratio satisfies the above range, an interaction between the second dispersants suitable for stably maintaining a 'conductor-dispersant' complex may be formed.

The total number of moles of glycol-based polymer repeating units also means a value obtained by adding all the number of moles of repeating units in each glycol-based polymer included in the second dispersant, and the molar ratio means a molar ratio when a glycol-based polymer is included in the auxiliary component of the second dispersant.

In one embodiment of the present invention, the auxiliary component includes both a lactone-based polymer and a glycol-based polymer. When the auxiliary component includes both a lactone-based polymer and a glycol-based polymer, interactions between the dispersant and the conductor and between the dispersants due to the above-described auxiliary component may be formed, so that the dispersed solution may maintain a stable dispersed state.

In one embodiment of the present invention, the second dispersant further includes a branched aliphatic hydrocarbon including at least one amine group and at least one hydroxy group.

The branched hydrocarbon means one in which one or more hydrocarbon chains are substituted on carbon atoms constituting a main chain. For example, isopentane corresponds to a branched hydrocarbon because an alkyl group chain is substituted on a main chain composed of 4 carbon atoms, and likewise, neopentane corresponds to a branched hydrocarbon because an alkyl group chain is substituted on a main chain composed of 3 carbon atoms.

As the second dispersant further includes a branched aliphatic hydrocarbon including at least one amine group and at least one hydroxy group, polymers included as a main component and an auxiliary component in the second dispersant may be uniformly mixed, and accordingly, when mixing the second dispersant in the dispersed solution, the polymers included as the main component and the auxiliary component in the second dispersant may be evenly distributed in the dispersed solution to form uniform interactions with the conductor, the dispersant, and the dispersion medium throughout the entire region of the dispersed solution. In addition, by including a branched hydrocarbon having a lower viscosity and higher solubility in an organic solvent compared to a linear hydrocarbon, the solubility of the second dispersant in the dispersion medium may be increased, and the branched aliphatic hydrocarbon may also form interactions with the conductor, the dispersant, and the dispersion medium without being aggregated in the dispersed solution, thereby contributing to maintaining a stable dispersed state of the dispersed solution.

In one embodiment of the present invention, the branched aliphatic hydrocarbon including at least one amine group and at least one hydroxy group in the dispersed solution is 50 parts by weight to 150 parts by weight based on 100 parts by weight of a sum of weights of the main component and the auxiliary component in the second dispersant. Specifically, the content of the hydrocarbon is 50 parts by weight or more, 60 parts by weight or more, 70 parts by weight or more, 80 parts by weight or more, 90 parts by weight or more, or 100 parts by weight or more, and 150 parts by weight or less, 140 parts by weight or less, 130 parts by weight or less, 120 parts by weight or less, or 110 parts by weight or less, and may be 50 parts by weight to 150 parts by weight, 70 parts by weight to 130 parts by weight, or 80 parts by weight to 120 parts by weight. When the content of the hydrocarbon satisfies the above range, the main component and the auxiliary component in the second dispersant may be evenly mixed by forming interactions with the main component and the auxiliary component in the second dispersant, and ionic compounds may be formed with the main component and the auxiliary component to effectively disperse the conductor and prevent aggregation in the dispersed solution, so that the dispersed solution may maintain a stable dispersed state.

In one embodiment of the present invention, the branched aliphatic hydrocarbon including at least one amine group and at least one hydroxy group is a C2 to C10 hydrocarbon.

In one embodiment of the present invention, the branched aliphatic hydrocarbon including at least one amine group and at least one hydroxy group includes one selected from the group consisting of 2-amino-2-methylpropan-1-ol, 2-amino-2-methylbutan-1-ol, 3-amino-2-methylpropan-1-ol, 2-amino-2-methylpentan-1-ol, 2-amino-2-ethylpropan-1-ol, 2-amino-2-ethylbutan-1-ol, 2-amino-2-methylhexan-1-ol, 2-amino-2-methylheptan-1-ol, 2-amino-2-ethylhexan-1-ol, 2-amino-2-methyloctan-1-ol, 3-amino-2-ethylpentan-1-ol, 3-amino-2-methylheptan-1-ol, and combinations thereof.

In one embodiment of the present invention, the dispersed solution further includes a third dispersant including a linear aliphatic hydrocarbon including at least one amine group and at least one hydroxy group.

The linear hydrocarbon, unlike the branched hydrocarbon, means one in which a hydrocarbon chain is not substituted on carbon atoms constituting a main chain. For example, n-pentane or n-hexane corresponds to a linear hydrocarbon because a hydrocarbon chain is not substituted on a main chain composed of 5 carbon atoms and 6 carbon atoms, respectively, and in the case of pentan-2-ol, it corresponds to a linear aliphatic hydrocarbon including a hydroxy group because only a hydroxy group is substituted on a main chain composed of 5 carbon atoms without substitution of a hydrocarbon chain.

By including the third dispersant including a linear aliphatic hydrocarbon including at least one amine group and at least one hydroxy group in the dispersed solution together with the first dispersant and the second dispersant, solubility of the first dispersant and the second dispersant in the dispersed solution may be improved. In addition, hydrogen bonds may be formed with the conductor to which the first dispersant or the second dispersant is bonded to prevent aggregation of the 'conductor-dispersant' complex, and by including a linear hydrocarbon having higher thermal and mechanical stability compared to a branched hydrocarbon, a stable dispersed state may be maintained in the dispersed solution even after a dispersion process such as high-pressure dispersion.

In one embodiment of the present invention, a content of the third dispersant in the dispersed solution is 1 part by weight to 60 parts by weight based on 100 parts by weight of the conductor. Specifically, the content of the third dispersant is 1 part by weight or more, 5 parts by weight or more, 10 parts by weight or more, or 20 parts by weight or more, and 60 parts by weight or less, 50 parts by weight or less, 40 parts by weight or less, or 30 parts by weight or less, and may be 1 part by weight to 60 parts by weight, 5 parts by weight to 50 parts by weight, or 10 parts by weight to 40 parts by weight. When the content of the third dispersant satisfies the above range, interactions among the dispersant and the dispersion medium, the dispersion medium and the conductor, and the dispersants may be smoothly formed to exhibit an effective dispersion effect of the conductor in the dispersed solution.

In one embodiment of the present invention, a content of the third dispersant in the dispersed solution is 5 parts by weight to 200 parts by weight based on 100 parts by weight of the first dispersant. Specifically, the content of the third dispersant is 5 parts by weight or more, 10 parts by weight or more, 20 parts by weight or more, 30 parts by weight or more, 40 parts by weight or more, 50 parts by weight or more, 60 parts by weight or more, or 70 parts by weight or more, and 200 parts by weight or less, 190 parts by weight or less, 180 parts by weight or less, 170 parts by weight or less, 160 parts by weight or less, 150 parts by weight or less, 140 parts by weight or less, 130 parts by weight or less, 120 parts by weight or less, 110 parts by weight or less, 100 parts by weight or less, 90 parts by weight or less, or 80 parts by weight or less, and may be 5 parts by weight to 200 parts by weight, 20 parts by weight to 180 parts by weight, or 50 parts by weight to 150 parts by weight. When the content of the third dispersant satisfies the above range, the dispersant may be uniformly dispersed in the dispersed solution, so that the dispersed solution may exhibit a low viscosity.

In one embodiment of the present invention, the linear aliphatic hydrocarbon including at least one amine group and at least one hydroxy group is a C1 to C6 hydrocarbon.

In one embodiment of the present invention, the linear aliphatic hydrocarbon including at least one amine group and at least one hydroxy group includes one selected from the group consisting of monoethanolamine, 3-aminopropanol, 4-aminobutanol, 5-aminopentanol, 6-aminohexanol, 3-aminopropan-2-ol, 3-aminobutan-2-ol, 3-aminopentanol, 4-aminobutan-2-ol, 4-aminopentan-3-ol, 5-aminopentan-2-ol, 5-aminohexan-2-ol, 6-aminohexan-3-ol, and combinations thereof.

### (3) Dispersion medium

The dispersion medium of the conductor dispersed solution according to one embodiment of the present invention is a dispersion medium for dispersing the carbon-based conductor and the dispersant, and is used to supply a conductor dispersed solution by pre-dispersing it in order to prevent aggregation when the carbon-based conductor in a powder state is directly used in manufacturing an electrode slurry composition.

In one embodiment of the present invention, the dispersion medium includes a non-aqueous polar solvent containing nitrogen atoms.

In one embodiment of the present invention, the dispersion medium includes a non-aqueous polar solvent containing one selected from the group consisting of a cyano group, an amine group, and an amide group.

The dispersion medium may be, for example, at least one selected from the group consisting of dimethylformamide (DMF), acetonitrile, dimethylacetamide (DMAc), N,N-dimethylpropionamide (DMPA), N-methylformamide (NMF), formamide, N,N-diethylformamide (DEF), 2-pyrrolidone, N-methyl-2-pyrrolidone (NMP), N-ethyl-2-pyrrolidone (NEP), ε-caprolactam, benzonitrile, propionitrile, and butyronitrile, but is not limited thereto.

The dispersion medium may be included in a content such that the electrode slurry composition may have an appropriate viscosity in consideration of coatability and the like of the electrode slurry composition to be manufactured later using the conductor dispersed solution.

### (4) Conductor dispersed solution

The present invention provides a conductor dispersed solution.

In one embodiment of the present invention, the conductor dispersed solution includes the carbon-based conductor, the dispersant, and the dispersion medium.

The conductor dispersed solution including the above components has excellent dispersibility and reduction in particle size of dispersed particles, so that the viscosity of the dispersed solution is low.

In one embodiment of the present invention, D₁₀ of carbon-based conductor dispersed particles in the conductor dispersed solution is 0.5 µm to 1.5 µm. Specifically, the D₁₀ is 0.5 µm or more, 0.6 µm or more, 0.7 µm or more, 0.8 µm or more, or 0.9 µm or more, and 1.5 µm or less, 1.4 µm or less, 1.3 µm or less, 1.2 µm or less, 1.1 µm or less, or 1.0 µm or less, and may be 0.5 µm to 1 µm, 0.7 µm to 1.3 µm, or 0.8 µm to 1.2 µm. When the D₁₀ satisfies the above range, an increase rate of viscosity of the dispersed solution according to an increase in conductor content in the dispersed solution may be alleviated.

In one embodiment of the present invention, D₅₀ of carbon-based conductor dispersed particles in the conductor dispersed solution is 1.5 µm to 2.5 µm. Specifically, the D₅₀ is 1.5 µm or more, 1.6 µm or more, 1.7 µm or more, 1.8 µm or more, 1.9 µm or more, or 2.0 µm or more, and 2.5 µm or less, 2.4 µm or less, 2.3 µm or less, 2.2 µm or less, or 2.1 µm or less, and may be 1.5 µm to 2.5 µm, 1.6 µm to 2.4 µm, or 1.8 µm to 2.2 µm. When the D₅₀ satisfies the above range, an increase rate of viscosity of the dispersed solution according to an increase in conductor content in the dispersed solution may be alleviated.

In one embodiment of the present invention, D₉₀ of carbon-based conductor dispersed particles in the conductor dispersed solution is 3 µm to 8 µm. Specifically, the D₉₀ is 3 µm or more, 3.5 µm or more, 4 µm or more, or 4.5 µm or more, and 8 µm or less, 7.5 µm or less, 7 µm or less, 6.5 µm or less, 6 µm or less, 5.5 µm or less, or 5 µm or less, and may be 3 µm to 8 µm, 3 µm to 7 µm, or 3.5 µm to 5 µm. When the D₉₀ satisfies the above range, an increase rate of viscosity of the dispersed solution according to an increase in conductor content in the dispersed solution may be alleviated.

In one embodiment of the present invention, particles dispersed in the conductor dispersed solution have a span value represented by the following [Formula 1] of 0.5 to 3. Specifically, the span value is 0.5 or more, 0.6 or more, 0.7 or more, 0.8 or more, 0.9 or more, 1 or more, 1.1 or more, 1.2 or more, 1.3 or more, 1.4 or more, 1.5 or more, 1.6 or more, or 1.7 or more, and 3 or less, 2.9 or less, 2.8 or less, 2.7 or less, 2.6 or less, 2.5 or less, 2.4 or less, 2.3 or less, 2.2 or less, 2.1 or less, 2 or less, 1.9 or less, or 1.8 or less, and may be 0.5 to 3, 1 to 3, or 1.5 to 2.5. When the span value satisfies the above range, dispersed particles in the dispersed solution may maintain a stable dispersed state. $span = \left[\left({D}_{90}-{D}_{10}\right)\right] / {D}_{50}$

In one embodiment of the present invention, the conductor dispersed solution has a viscosity of 0.1 Pa·s to 1 Pa·s measured at 25°C and 40 rpm for 5 minutes using a viscometer (manufactured by Brookfiled, RVDV2T, spindle No. 4). Specifically, the viscosity is 0.1 Pa·s or more, 0.15 Pa·s or more, 0.2 Pa·s or more, or 0.25 Pa·s or more, and 1 Pa·s or less, 0.95 Pa·s or less, 0.9 Pa·s or less, 0.85 Pa·s or less, 0.8 Pa·s or less, 0.75 Pa·s or less, 0.7 Pa·s or less, 0.65 Pa·s or less, 0.6 Pa·s or less, 0.55 Pa·s or less, 0.5 Pa·s or less, 0.45 Pa·s or less, 0.4 Pa·s or less, 0.35 Pa·s or less, or 0.3 Pa·s or less, and may be 0.1 Pa·s to 1 Pa·s, 0.1 Pa·s to 0.8 Pa·s, or 0.15 Pa·s to 0.6 Pa·s. When the viscosity satisfies the above range, the conductor is evenly distributed in the dispersed solution, so that use of the dispersed solution is easy when manufacturing an electrode slurry composition.

### Method for manufacturing conductor dispersed solution

The present invention provides a method for manufacturing a conductor dispersed solution.

In one embodiment of the present invention, the manufacturing method is a method for manufacturing a conductor dispersed solution including the carbon-based conductor, the dispersant, and the dispersion medium.

In one embodiment of the present invention, the method for manufacturing the conductor dispersed solution includes: (1) mixing a carbon-based conductor, a first dispersant, a second dispersant, and a dispersion medium to manufacture a primary conductor dispersed solution, and (2) dispersing the primary conductor dispersed solution to manufacture a secondary conductor dispersed solution.

In step (1), first, a first dispersant, a second dispersant, and a dispersion medium are mixed to prepare a mixed solution.

In step (1), thereafter, a primary conductor dispersed solution is prepared through a step of mixing a conductor with the mixed solution.

In one embodiment of the present invention, mixing for preparing the primary conductor dispersed solution may be performed using a conventional mixing method, specifically, a mixing device such as a PD mixer, a Pony mixer, a Change-can mixer, a Hobert mixer, a planetary mixer, a butterfly mixer, a stone mill, a homogenizer, a bead mill, a ball mill, a basket mill, an attrition mill, a universal stirrer, a clear mixer, or a TK mixer, and may include a step of mixing at a rotational speed of 300 rpm to 10,000 rpm for 30 minutes to 7 hours.

In one embodiment of the present invention, when mixing for preparing the primary conductor dispersed solution, cavitation dispersion treatment may be performed in order to increase miscibility of the carbon-based conductor and the dispersion medium or dispersibility of the conductor in the dispersion medium. The cavitation dispersion treatment is a dispersion treatment method using shock waves generated by bursting of vacuum bubbles generated in water when high energy is applied to a liquid, and the conductor may be dispersed without damaging properties of the conductor by the method. Specifically, the cavitation dispersion treatment may be performed by ultrasonic waves, a jet mill, or shear dispersion treatment.

In one embodiment of the present invention, the step of preparing the primary conductor dispersed solution may be performed under a temperature condition at which physical properties including viscosity of the mixture do not change due to evaporation of the dispersion medium. For example, it may be performed at a temperature of 50°C or less, more specifically, 5°C to 50°C.

In step (2), a secondary conductor dispersed solution is prepared by dispersing the primary conductor dispersed solution.

In one embodiment of the present invention, the process of preparing the secondary conductor dispersed solution may be performed by a method such as a ball mill, a bead mill, a disc mill, a basket mill, or a high pressure homogenizer, and more specifically, may be performed by a milling dispersion method using a bead mill or a high pressure homogenizer.

In one embodiment of the present invention, when milling by the disc mill or the bead mill, a size of beads may be appropriately determined according to a type and amount of carbon nanotubes and a type of dispersant. Specifically, a diameter of the beads may be 0.1 mm to 5 mm, more specifically, 0.5 mm to 4 mm. In addition, a bead milling process may be performed at a speed of 1,000 rpm to 10,000 rpm, and more specifically, may be performed at a speed of 2,000 rpm to 9,000 rpm.

Milling by the high-pressure homogenizer is performed by, for example, pressurizing the mixture with a plunger pump of the high-pressure homogenizer and pushing it through a gap of a homogenizing valve, whereby forces such as cavitation, shear, impact, and explosion when passing through the gap are used.

In one embodiment of the present invention, the dispersion process may be performed according to a degree of dispersion of the conductor dispersed solution. Specifically, it may be performed under a pressure of 5,000 psi to 30,000 psi for 30 minutes to 120 minutes, more specifically, 60 minutes to 90 minutes, and the process may be repeated 3 to 12 times.

In one embodiment of the present invention, the step (2) includes a high-pressure dispersion process.

The conductor dispersed solution according to the present invention may mean the secondary conductor dispersed solution.

### Electrode slurry composition for lithium secondary battery

The present invention also provides an electrode slurry composition for a secondary battery.

In one embodiment of the present invention, the electrode slurry composition for a secondary battery includes the conductor dispersed solution and an electrode active material.

In one embodiment of the present invention, the electrode slurry composition for a lithium secondary battery may be a positive electrode slurry composition or a negative electrode slurry composition, and specifically, may be a positive electrode slurry composition.

In one embodiment of the present invention, the electrode slurry composition for a lithium secondary battery may include the conductor dispersed solution, a positive electrode active material or a negative electrode active material as an electrode active material, a binder, and optionally a solvent and/or other additives.

In one embodiment of the present invention, as the positive electrode active material, positive electrode active materials well known in the art may be used without limitation, and for example, lithium cobalt-based oxide, lithium nickel-based oxide, lithium manganese-based oxide, lithium iron phosphate, lithium nickel manganese cobalt-based oxide, or combinations thereof may be used. Specifically, as the positive electrode active material, LiCoO₂, LiNiO₂, LiMn₂O₄, LiCoPO₄, LiFePO₄, and LiNiₐMn_{b}Co_{c}O₂ (where 0 < a, b, c < 1), and the like may be used, but are not limited thereto.

In one embodiment of the present invention, as the negative electrode active material, at least one negative electrode active material selected from the group consisting of natural graphite, artificial graphite, and carbonaceous materials; lithium-containing titanium composite oxide (LTO), metals (Me) that are Si, Sn, Li, Zn, Mg, Cd, Ce, Ni, or Fe; alloys composed of the metals (Me); oxides (MeOₓ) of the metals (Me); and composites of the metals (Me) and carbon may be used. The negative electrode active material may be included in an amount of 60 wt% to 98 wt%, more preferably 70 wt% to 98 wt%, based on a total weight of solids excluding a solvent in the negative electrode slurry.

In one embodiment of the present invention, the binder is a component that assists in bonding of the active material and the conductor and bonding to the current collector, and is typically added in an amount of 1 wt% to 30 wt% based on a total weight of a mixture including an electrode active material. Examples of such a binder include polyvinylidene fluoride, polyvinyl alcohol, carboxymethyl cellulose (CMC), starch, hydroxypropyl cellulose, regenerated cellulose, polyvinylpyrrolidone, tetrafluoroethylene, polyethylene, polypropylene, ethylene-propylene-diene terpolymer (EPDM), sulfonated EPDM, styrene-butadiene rubber, fluorine rubber, and various copolymers.

In one embodiment of the present invention, the solvent may be an organic solvent such as N-methyl pyrrolidone (NMP), dimethyl formamide (DMF), acetone, or dimethyl acetamide, or water, and these solvents may be used alone or in combination of two or more thereof. An amount of the solvent used is sufficient as long as it can dissolve and disperse the electrode active material, the binder, and the conductor in consideration of a coating thickness of the slurry and a manufacturing yield.

In one embodiment of the present invention, the viscosity modifier may be carboxymethyl cellulose or polyacrylic acid, and by addition, the viscosity of the electrode slurry may be adjusted so that manufacturing of the electrode slurry and a coating process on the electrode current collector are facilitated.

In one embodiment of the present invention, the filler is optionally used as a component that suppresses expansion of the electrode, and is not particularly limited as long as it is a fibrous material without causing chemical changes in the battery, and for example, fibrous materials such as olefin-based polymers such as polyethylene and polypropylene; glass fiber, and carbon fiber are used.

In one embodiment of the present invention, when the electrode slurry composition is a composition of a positive electrode slurry for forming a positive electrode, a positive electrode may be manufactured through drying and rolling after coating the composition of the positive electrode slurry on a positive electrode current collector. Alternatively, it may be manufactured by casting the positive electrode slurry on a separate support, and then laminating a film obtained by peeling from the support on the positive electrode current collector.

In one embodiment of the present invention, a thickness of a positive electrode active material layer formed by the positive electrode slurry may vary depending on a loading amount, a loading speed, and the like for coating the positive electrode slurry.

In one embodiment of the present invention, the positive electrode current collector has a thickness of 3 µm to 500 µm. Such a positive electrode current collector is not particularly limited as long as it has high conductivity without causing chemical changes in the battery. For example, stainless steel, aluminum, nickel, titanium, calcined carbon, or a surface-treated aluminum or stainless steel with carbon, nickel, titanium, silver, or the like may be used. In addition, a bonding force of the positive electrode active material may be strengthened by forming fine irregularities on a surface of the positive electrode current collector, and it may be used in various forms such as a film, a sheet, a foil, a net, a porous body, a foam, and a nonwoven fabric body.

In one embodiment of the present invention, when the electrode slurry composition is a composition of a negative electrode slurry for forming a negative electrode, a negative electrode may be manufactured through drying and rolling after coating the composition of the negative electrode slurry on a negative electrode current collector. Alternatively, it may be manufactured by casting the negative electrode slurry on a separate support, and then laminating a film obtained by peeling from the support on the negative electrode current collector.

In one embodiment of the present invention, a thickness of a negative electrode active material layer formed by the negative electrode slurry may vary depending on a loading amount, a loading speed, and the like for coating the negative electrode slurry.

In one embodiment of the present invention, the negative electrode current collector has a thickness of 3 µm to 500 µm. Such a negative electrode current collector is not particularly limited as long as it has high conductivity without causing chemical changes in the battery, and for example, copper, stainless steel, aluminum, nickel, titanium, calcined carbon, a surface-treated copper or stainless steel with carbon, nickel, titanium, silver, or the like, an aluminum-cadmium alloy, or the like may be used. In addition, like the negative electrode current collector, a bonding force of the negative electrode active material may be strengthened by forming fine irregularities on a surface, and it may be used in various forms such as a film, a sheet, a foil, a net, a porous body, a foam, and a nonwoven fabric body.

### Lithium secondary battery

The present invention provides a lithium secondary battery.

In one embodiment of the present invention, the lithium secondary battery includes: the above-described positive electrode, the negative electrode, a separator disposed between the positive electrode and the negative electrode, and an electrolyte. Since the positive electrode and the negative electrode are the same as those described above, detailed descriptions thereof will be omitted.

The separator separates the negative electrode and the positive electrode and provides a passage for movement of lithium ions, and may be used without particular limitation as long as it is normally used as a separator in a lithium secondary battery, and in particular, it is preferable that it has low resistance to ion movement of the electrolyte and excellent electrolyte moisture-holding ability. Specifically, a porous polymer film, for example, a porous polymer film made of a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof may be used. In addition, a conventional porous nonwoven fabric, for example, a nonwoven fabric made of high melting point glass fiber, polyethylene terephthalate fiber, or the like may also be used. In addition, a coated separator including a ceramic component or a polymer material may be used for securing heat resistance or mechanical strength, and may be optionally used in a single-layer or multilayer structure.

In one embodiment of the present invention, the electrolyte may be an organic-based liquid electrolyte, an inorganic-based liquid electrolyte, a solid polymer electrolyte, a gel-type polymer electrolyte, a solid inorganic electrolyte, or a molten inorganic electrolyte usable when manufacturing a lithium secondary battery, but is not limited thereto. Specifically, the electrolyte may include an organic solvent and a lithium salt.

In one embodiment of the present invention, the organic solvent may be used without particular limitation as long as it can serve as a medium through which ions involved in electrochemical reactions of the battery may move. Specifically, as the organic solvent, ester-based solvents such as methyl acetate, ethyl acetate, γ-butyrolactone, and ε-caprolactone; ether-based solvents such as dibutyl ether and tetrahydrofuran; ketone-based solvents such as cyclohexanone; aromatic hydrocarbon-based solvents such as benzene and fluorobenzene; carbonate-based solvents such as dimethylcarbonate (DMC), diethylcarbonate (DEC), methylethylcarbonate (MEC), ethylmethylcarbonate (EMC), ethylene carbonate (EC), and propylene carbonate (PC); alcohol-based solvents such as ethyl alcohol and isopropyl alcohol; nitriles such as R-CN (where R is a linear, branched, or cyclic hydrocarbon group of C2 to C20, and may include a double bond aromatic ring or an ether bond); amides such as dimethylformamide; dioxolanes such as 1,3-dioxolane; or sulfolanes may be used. Among these, carbonate-based solvents are preferable, and a mixture of a cyclic carbonate having high ionic conductivity and high dielectric constant capable of improving charge/discharge performance of the battery (for example, ethylene carbonate or propylene carbonate) and a low-viscosity linear carbonate-based compound (for example, ethylmethylcarbonate, dimethylcarbonate, or diethylcarbonate) is more preferable. In this case, when the cyclic carbonate and the linear carbonate are mixed and used at a volume ratio of about 1:1 to about 1:9, excellent performance of the electrolyte may appear.

In one embodiment of the present invention, the lithium salt may be used without particular limitation as long as it is a compound capable of providing lithium ions used in a lithium secondary battery. Specifically, the lithium salt may be LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂, or the like. It is preferable to use the lithium salt at a concentration in a range of 0.1 M to 2.0 M. When the concentration of the lithium salt is included in the above range, the electrolyte has appropriate conductivity and viscosity, so that excellent electrolyte performance may be exhibited, and lithium ions may move effectively.

In one embodiment of the present invention, in addition to the electrolyte components, the electrolyte may further include, for example, haloalkylene carbonate-based compounds such as difluoro ethylene carbonate, pyridine, triethyl phosphite, triethanolamine, cyclic ether, ethylene diamine, n-glyme, hexaphosphoric triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxy ethanol, or aluminum trichloride as additives for the purpose of improving life characteristics of the battery, suppressing reduction in battery capacity, improving discharge capacity of the battery, and the like. At this time, the additive may be included in an amount of 0.1 wt% to 5 wt% based on a total weight of the electrolyte.

In one embodiment of the present invention, the lithium secondary battery includes an electrode manufactured using the conductor dispersed solution according to the present invention, specifically, a negative electrode manufactured using the conductor dispersed solution. The lithium secondary battery including an electrode manufactured using the conductor dispersed solution according to the present invention, specifically, a lithium secondary battery including a negative electrode manufactured using the conductor dispersed solution, may stably exhibit excellent discharge capacity and output characteristics because the conductor is uniformly dispersed in the negative electrode, so that the content thereof may be reduced. As a result, it may be usefully used in portable devices such as mobile phones, notebook computers, and digital cameras, and in the field of electric vehicles such as hybrid electric vehicles (HEV).

Accordingly, according to another embodiment of the present invention, the lithium secondary battery, a battery module including the lithium secondary battery as a unit cell, and a battery pack including the same may be provided.

The battery module or the battery pack may be used as a power source for any one or more of medium- to large-sized devices among a power tool; an electric vehicle including an electric vehicle (EV), a hybrid electric vehicle, and a plug-in hybrid electric vehicle (PHEV); or a power storage system.

### [MODE FOR CARRYING OUT THE INVENTION]

Hereinafter, specific embodiments of the present invention will be presented. However, the embodiments described below are merely for specifically illustrating or explaining the present invention, and the present invention is not limited thereto. In addition, contents not described herein are omitted from the description as those skilled in the art can sufficiently infer technically.

### Examples

### <Example 1>

### (1) Preparation of primary conductor dispersed solution

7.35 g (1.47 wt% in the dispersed solution) of polyvinylpyrrolidone (PVP) (manufactured by Boai NKY^{®} Pharmaceuticals, NKY PVP K30) as a first dispersant including a vinyl-based polymer containing nitrogen atoms, 1.05 g (0.21 wt% in the dispersed solution) of monoethanolamine (MEA) (manufactured by Duksan Pharmaceutical Co., Ltd.) as a third dispersant, and N-methyl-2-pyrrolidone (NMP) (manufactured by Daejung Chemical & Metals Co., Ltd.) as a dispersion medium are mixed to prepare 472 g of a mixed solution. After adding 21 g (4.2 wt% in the conductor dispersed solution) of multi-walled carbon nanotubes (MWCNT, manufactured by LG Chem, BT1003M) having a specific surface area of 250 m²/g as a carbon-based conductor to the mixed solution, it is stirred at 6,000 rpm for 180 minutes through a PD mixer (manufactured by TSI, PDM-1T 1500L) to prepare a mixture.

To the mixture, 2.1 g (0.42 wt% in the dispersed solution) of a dispersant including a polymer blend containing cellulose as a main component; polycaprolactone and polypropylene glycol as auxiliary components, wherein a total number of moles of cellulose repeating units : a total number of moles of polycaprolactam repeating units : a total number of moles of polypropylene glycol repeating units is 61.9:10:9.7, and 2-amino-2-methylpropan-1-ol, as a second dispersant, was added, and for addition of the second dispersant, 7 g of a solution (manufactured by BYK, LP N 25542) containing 15 wt% of the polymer blend and 15 wt% of the 2-amino-2-methylpropan-1-ol was added, and it was stirred at 8,000 rpm for 60 minutes through a dissolving tank (dissolver, manufactured by VMA-GETZMANN, Dispermat-CA) equipped with an impeller and a vessel to prepare a total of 500 g of a primary conductor dispersed solution.

### (2) Preparation of conductor dispersed solution

A conductor dispersed solution was prepared by homogeneously dispersing the primary conductor dispersed solution 9 times at a pressure of 20,000 psi using a high-pressure disperser (manufactured by Micronox, PICOMAX).

### <Example 2>

A conductor dispersed solution was prepared in the same manner as in Example 1 except that the third dispersant was not added.

### <Comparative Example 1>

A conductor dispersed solution was prepared in the same manner as in Example 1 except that 3 g of a dispersant containing an ammonium salt of an acidic copolymer (manufactured by BYK, ET3001) was used as the second dispersant.

### <Comparative Example 2>

A conductor dispersed solution was prepared in the same manner as in Example 1 except that 2.1 g of a dispersant containing a polyvinylbutyral-based resin (manufactured by Sekisui, FX-08) was used as the second dispersant.

### <Comparative Example 3>

A conductor dispersed solution was prepared in the same manner as in Example 1 except that 2.1 g of a dispersant containing a butadiene-styrene copolymer (manufactured by Cray Valley, Ricon^{®}) was used as the second dispersant.

### <Comparative Example 4>

A conductor dispersed solution was prepared in the same manner as in Example 1 except that the second dispersant was not added.

### <Example 3>

A primary conductor dispersed solution was prepared by stirring a first dispersant, a second dispersant, a third dispersant, a dispersion medium, and a carbon-based conductor at 6,000 rpm for 180 minutes through a PD mixer (manufactured by TSI), and a conductor dispersed solution was prepared by homogeneously dispersing the primary conductor dispersed solution 9 times, and a conductor dispersed solution was prepared in the same manner as in Example 1 except that 5.25 g (1.05 wt% in the dispersed solution) of the first dispersant, 1.05 g (0.21 wt% in the dispersed solution) of the second dispersant, and 5.25 g (1.05 wt% in the dispersed solution) of the third dispersant were mixed.

### <Example 4>

A conductor dispersed solution was prepared in the same manner as in Example 3 except that 7.35 g (1.47 wt% in the dispersed solution) of the first dispersant, 2.1 g (0.42 wt% in the dispersed solution) of the second dispersant, and 1.05 g (0.21 wt% in the dispersed solution) of the third dispersant were mixed.

### <Example 5>

A conductor dispersed solution was prepared in the same manner as in Example 3 except that 6.3 g (1.26 wt% in the dispersed solution) of the first dispersant, 1.05 g (0.21 wt% in the dispersed solution) of the second dispersant, and 5.25 g (1.05 wt% in the dispersed solution) of the third dispersant were mixed.

### <Example 6>

A conductor dispersed solution was prepared in the same manner as in Example 3 except that 6.3 g (1.26 wt% in the dispersed solution) of the first dispersant, 1.05 g (0.21 wt% in the dispersed solution) of the second dispersant, and 10.5 g (2.1 wt% in the dispersed solution) of the third dispersant were mixed.

### Experimental Examples

### <Experimental Example 1: Particle size analysis>

Particle sizes of dispersed particles for each of the conductor dispersed solutions of Examples and Comparative Examples were analyzed through a laser diffraction method and shown in [Table 1] and [Table 2]. Specifically, after dispersing the conductor dispersed solution in a solvent, the dispersed solution immediately after dispersion was introduced into a laser diffraction particle size measurement equipment (manufactured by Malvern, Mastersizer 3000) to measure a difference in diffraction pattern according to particle size when particles pass through a laser beam at 25°C, thereby calculating a particle size distribution. D₁₀, D₅₀, and D₉₀ were measured by checking particle sizes at points where volume cumulative distributions according to particle size were 10%, 50%, and 90%.

In addition, span values of Examples and Comparative Examples were calculated through the following [Formula 1] using the measured D₁₀, D₅₀, and D₉₀ values, and then shown in [Table 1] and [Table 2]. $span = \left[\left({D}_{90}-{D}_{10}\right)\right] / {D}_{50}$

### <Experimental Example 2: Viscosity analysis>

Viscosities of the conductor dispersed solutions prepared according to the Examples and Comparative Examples were measured at 25°C and 40 rpm for 5 minutes using a viscometer (manufactured by Brookfiled, RVDV2T, spindle No. 4), and viscosities after 5 minutes are shown in the following [Table 1] and [Table 2].

**[Table 1]**

| | D₁₀ (µm) | D₅₀ (µm) | D₉₀ (µm) | span | Viscosity (Pa.s) | span× Viscosity (Pa.s) |
|---|---|---|---|---|---|---|
| Example 1 | 1.0 | 2.1 | 4.8 | 1.8 | 0.185 | 0.33 |
| Example 2 | 1.0 | 2.0 | 4.9 | 2.0 | 0.510 | 1.02 |
| Comp. Ex. 1 | 1.0 | 2.1 | 4.3 | 1.6 | 0.760 | 1.22 |
| Comp. Ex. 2 | 1.1 | 2.1 | 4.5 | 1.6 | 0.965 | 1.55 |
| Comp. Ex. 3 | 0.9 | 2.1 | 4.8 | 1.9 | 0.695 | 1.32 |
| Comp. Ex. 4 | 1.0 | 2.1 | 5.3 | 2.1 | 0.960 | 2.02 |

**[Table 2]**

| | D₁₀ (µm) | D₅₀ (µm) | D₉₀ (µm) | span | Viscosity (Pa.s) | span× Viscosity (Pa.s) |
|---|---|---|---|---|---|---|
| Example 3 | 1.0 | 1.8 | 3.7 | 1.5 | 0.175 | 0.26 |
| Example 4 | 1.0 | 2.1 | 6.5 | 2.6 | 0.220 | 0.57 |
| Example 5 | 1.0 | 2.1 | 4.7 | 1.8 | 0.500 | 0.90 |
| Example 6 | 1.0 | 2.1 | 4.8 | 1.8 | 0.340 | 0.61 |

As shown in the above [Table 1], when a dispersant containing a cellulose-based polymer as a main component and at least one of a lactone-based polymer and a glycol-based polymer as an auxiliary component is used as the second dispersant, as in the dispersed solutions of Example 1 and Example 2, it can be confirmed that even when a high content of the conductor is included, dispersed particles in the dispersed solution are small and the viscosity of the dispersed solution does not have a high value.

In particular, although the dispersed solutions of Comparative Examples 1 to 3 exhibit a low span value and a small particle size at a level equivalent to the Examples, they show a viscosity nearly 4 times higher than the viscosity of the dispersed solution of Example 1, and through the fact that the product of the span value and the viscosity also exhibits a value nearly 4 times different from that of the dispersed solution of Example 1, it can be seen that the second dispersant containing a cellulose-based polymer as a main component and at least one of a lactone-based polymer and a glycol-based polymer as an auxiliary component is effective in reducing dispersed solution viscosity and improving dispersion effect beyond commercially available conductor dispersants.

In addition, through the fact that the dispersed solution of Comparative Example 4, which does not include the second dispersant, exhibits not only higher viscosity than Comparative Examples 1 to 3 but also an inferior value in the product of the span value and the viscosity, it can be seen that the second dispersant must be included to bring about improvement effects in both particle size and viscosity aspects.

In addition, although the dispersed solution of Example 2, which does not include the third dispersant, exhibits lower viscosity than other Comparative Examples, through the fact that the value of the product of the span value and the viscosity is somewhat higher when compared with Example 1, it can be seen that when the third dispersant is included, conductor dispersed solution may be achieved more effectively.

Through the above [Table 2], it can be confirmed that by using the second dispersant containing a cellulose-based polymer as a main component and at least one of a lactone-based polymer and a glycol-based polymer as an auxiliary component, both the particle size of dispersed particles in the dispersed solution and the viscosity of the dispersed solution are improved in all of Examples 3 to 6, and in particular, it can be confirmed that the product of the span value and the viscosity is 1 or less, exhibiting an excellent dispersion effect.

In particular, it can be seen that the particle size of dispersed particles in the dispersed solution was effectively reduced in Examples 3, 5, and 6, in which the content of the second dispersant is 25 parts by weight or less based on 100 parts by weight of the first dispersant, and in Examples 3 and 6, in which the content of the third dispersant is 90 parts by weight or more based on 100 parts by weight of the first dispersant, it can be seen that the effect of reducing the particle size of dispersed particles in the dispersed solution and the effect of reducing the viscosity of the dispersed solution appeared evenly.

In addition, Examples 3 to 6 show differences in the content of the third dispersant based on the second dispersant, the content of the second dispersant based on the conductor, the content of the second dispersant based on the first dispersant, and the like, in addition to the above content, so it can be seen that when a dispersed solution is prepared under conditions similar to Example 3 through adjustment of contents of substances included in the dispersed solution and content ratios among substances, the effect of reducing the particle size of dispersed particles in the dispersed solution and the effect of reducing the viscosity of the dispersed solution may appear more excellently.

Therefore, it can be seen that when a dispersant containing a cellulose-based polymer as a main component and at least one of a lactone-based polymer and a glycol-based polymer as an auxiliary component is used as the second dispersant in the dispersed solution, an effect of reducing the particle size of dispersed particles in the dispersed solution and the viscosity of the dispersed solution beyond commercially available conductor dispersants may be exhibited, and when the third dispersant is included and the content and content ratio of each substance in the dispersed solution are close to Example 3, the dispersion effect of the conductor in the dispersed solution may be further improved.

Although the preferred embodiments of the present invention have been described in detail above, the scope of rights of the present invention is not limited thereto, and various modifications and improvements by those skilled in the art using the basic concept of the present invention defined in the following claims also fall within the scope of rights of the present invention.

## Claims

1. A conductor dispersed solution comprising:
a carbon-based conductor;
a first dispersant including a vinyl-based polymer containing nitrogen atoms;
a second dispersant including a main component and an auxiliary component; and
a dispersion medium,
wherein the main component includes a cellulose-based polymer, and
the auxiliary component includes at least one of a lactone-based polymer and a glycol-based polymer.

2. The conductor dispersed solution according to claim 1, wherein:
the auxiliary component includes both the lactone-based polymer and the glycol-based polymer.

3. The conductor dispersed solution according to claim 1, wherein:
the second dispersant further includes a branched aliphatic hydrocarbon including at least one amine group and at least one hydroxy group.

4. The conductor dispersed solution according to claim 1, wherein:
a content of the first dispersant in the dispersed solution is 5 parts by weight to 60 parts by weight based on 100 parts by weight of the conductor.

5. The conductor dispersed solution according to claim 1, wherein:
a content of the second dispersant in the dispersed solution is 1 part by weight to 20 parts by weight based on 100 parts by weight of the conductor.

6. The conductor dispersed solution according to claim 1, wherein:
a content of the second dispersant in the dispersed solution is 10 parts by weight to 40 parts by weight based on 100 parts by weight of the first dispersant.

7. The conductor dispersed solution according to claim 1, wherein:
a total number of moles of cellulose-based polymer repeating units in the second dispersant : a total number of moles of lactone-based polymer repeating units is 2:1 to 10:1, and
a total number of moles of cellulose-based polymer repeating units in the second dispersant : a total number of moles of glycol-based polymer repeating units is 2:1 to 10:1.

8. The conductor dispersed solution according to claim 1, wherein:
the dispersed solution further includes a third dispersant including a linear aliphatic hydrocarbon including at least one amine group and at least one hydroxy group.

9. The conductor dispersed solution according to claim 8, wherein:
a content of the third dispersant in the dispersed solution is 1 part by weight to 60 parts by weight based on 100 parts by weight of the conductor.

10. The conductor dispersed solution according to claim 8, wherein:
a content of the third dispersant in the dispersed solution is 5 parts by weight to 200 parts by weight based on 100 parts by weight of the first dispersant.

11. The conductor dispersed solution according to claim 1, wherein:
particles dispersed in the conductor dispersed solution have a span value represented by the following [Formula 1] of 0.5 to 3. $span = \left[\left({D}_{90}-{D}_{10}\right)\right] / {D}_{50}$
where D₉₀ is a particle size corresponding to 90% of a volume cumulative distribution of particles dispersed in the dispersed solution,
D₅₀ is a particle size corresponding to 50% of a volume cumulative distribution of particles dispersed in the dispersed solution, and
D₁₀ is a particle size corresponding to 10% of a volume cumulative distribution of particles dispersed in the dispersed solution.

12. The conductor dispersed solution according to claim 1, wherein:
the dispersion medium includes a non-aqueous polar solvent containing nitrogen atoms.

13. The conductor dispersed solution according to claim 1, wherein:
the carbon-based conductor includes one selected from the group consisting of carbon nanotubes; carbon black; and combinations thereof.

14. A method for manufacturing the conductor dispersed solution according to claim 1, the method comprising:
(1) mixing a carbon-based conductor, a first dispersant, a second dispersant, and a dispersion medium to manufacture a primary conductor dispersed solution; and
(2) dispersing the primary conductor dispersed solution to manufacture a secondary conductor dispersed solution.

15. The method for manufacturing a conductor dispersed solution according to claim 14, wherein:
the step (2) includes a high-pressure dispersion process.
